# EUROPÄISCHE PATENTSCHRIFT

(11) **EP 0 713 797 B1**
(45) Veröffentlichungstag und Bekanntmachung des Hinweises auf die Patenterteilung: **19.08.1998**
(21) Anmeldenummer: 95115531.6
(22) Anmeldetag: 02.10.1995
(51) Int. Cl.: B60J 10/10, B60J 7/12

(54) **Faltverdeck für Fahrzeuge**
Folding top for vehicle
Capote pliante pour véhicule

(30) Priorität: 23.11.1994 DE 4441668
(43) Veröffentlichungstag der Anmeldung: 29.05.1996
(73) Patentinhaber: Dr.Ing.h.c. F. Porsche Aktiengesellschaft, 70435 Stuttgart (DE)
(72) Erfinder: Aydt, Matthias, D-71735 Eberdingen (DE); Pfertner, Kurt, D-71299 Wimsheim (DE); Zeissner, Alexander, D-75428 Illingen (DE); Thomas, Peter, D-75233 Tiefenbronn (DE); Blech, Christof, D-71272 Renningen (DE)

(56) Entgegenhaltungen:
- DE-A- 3 834 858
- DE-U- 8 808 136
- US-A- 2 482 323
- US-A- 3 075 804

## Beschreibung

Die Erfindung bezieht sich auf ein Faltverdeck für Fahrzeuge, insbesondere Personenkraftwagen, gemäß dem Oberbegriff des Patentanspruchs 1.

Bei einem bekannten Faltverdeck der eingangs genannten Gattung (EP 0 521 307 A1) ist der Verdeckbezug in Schließstellung zwischen einem die Heckscheibe umschließenden hinteren Bereich und einem vorderen Randbereich oberhalb der Windschutzscheibe verspannt. Über die Anbindung des Verdeckbezuges an den Längsseiten des Verdeckgestells ist in dieser Schrift nichts ausgesagt.

Aufgabe der Erfindung ist es, die Anbindung des Verdeckbezugs an den Längsseiten so zu gestalten, daß neben einem leichtgängigen Öffnen und Schließen des Faltverdecks eine funktionsgerechte Dichtigkeit erzielt wird und Toleranzen des Verdeckbezugs ausgeglichen werden können und daß Überdehnungen des Verdeckbezugs während des Öffnens bzw. Schließens vermieden werden.

Erfindungsgemäß wird diese Aufgabe durch die kennzeichnenden Merkmale des Anspruchs 1gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die lediglich teilweise feste Anbindung des Verdeckbezugs an den Längsseiten des Verdeckgestells ein leichtgängiges Öffnen und Schließen des Faltverdecks erzielt wird.

Der Verdeckbezug ist einerseits am formsteifen vorderen Verdeckabschnitt und andererseits am Hauptspriegel befestigt, wogegen der Verdeckbezug an einer dazwischenliegenden B-Säule des Verdeckgestells befestigungslos anliegt.

Durch ein im Bereich der B-Säule vorgesehenes Spannseil am Rand des Verdeckbezugs und eine Stoffsteuerung wird der Verdeckbezug in der Schließstellung des Faltverdecks selbsttätig in die an der B-Säule vorgesehene Aufnahme hineingezogen, so daß er eine straffe, faltenlose Außenkontur aufweist und eine funktionsgerechte Abdichtung zwischen Verdeckbezug und B-Säule erzielt wird.

Die selbsttätige Stoffsteuerung wird durch ein mit dem Verdeckbezug zusammenwirkendes Stretchband, einen federbelasteten Schieber oder eine federbelastete Klappe gebildet. Die Stoffsteuerung ist erforderlich, weil beim Öffnen und Schließen des Faltverdecks eine Relativbewegung von B-Säule und Hauptspriegel in Fahrzeugquerrichtung stattfindet und der Verdeckbezug in Teilbereichen schneller in Fahrzeuglängsrichtung zurückgeholt werden muß wie die angrenzenden Bauteile (B-Säule, Hauptspriegel).

Die angeführten Beispiele der Stoffsteuerung weisen einen einfachen Aufbau und eine gute Funktion auf.

Ein Ausführungsbeispiel der Erfindung ist in der Zeichnung dargestellt und wird im folgenden näher erläutert:

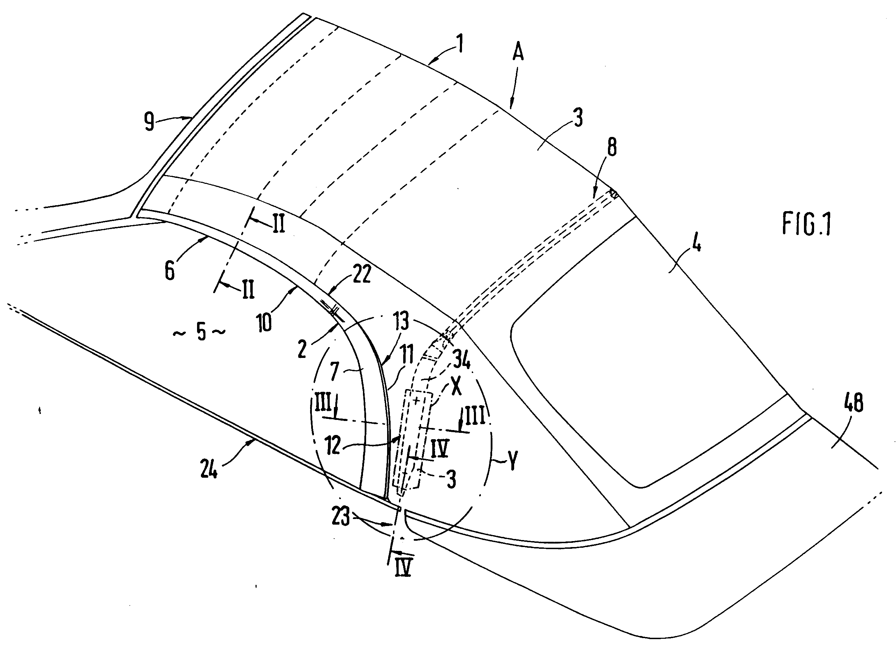

Es zeigen
- Fig. 1: eine perspektivische Teilansicht von schräg hinten auf einen Personenkraftwagen mit einem Faltverdeck,
- Fig. 2: einen Schnitt nach der Linie II-II der Fig. 1 in größerem Maßstab,
- Fig. 3: einen Schnitt nach der Linie III-III der Fig. 1 in gößerem Maßstab,
- Fig. 4: einen Schnitt nach der Linie IV-IV der Fig. 1 in größerem Maßstab,
- Fig. 5: einen Ausschnitt X gemäß Fig. 1 einer weiteren Ausführungsform einer Stoffsteuerung,
- Fig. 6: einen Schnitt nach der Linie VI-VI der Fig. 5,
- Fig. 7: einen Schnitt nach der Linie VII-VII der Fig. 5,
- Fig. 8: einen Ausschnitt Y gemäß Fig. 1 einer dritten Ausführungsform einer Stoffsteuerung,
- Fig. 9: einen Schnitt nach der Llnie IX-IX der Fig. 8 in größerem Maßstab.

Ein Faltverdeck 1 für ein Fahrzeug, insbesondere für einen Personenkraftwagen, umfaßt ein tragendes Verdeckgestell 2 und einen an diesem befestigten Verdeckbezug 3. Der Verdeckbezug 3 weist in einem hinteren Bereich eine Heckscheibe 4 auf, die durch eine starre oder flexible Sichtscheibe gebildet wird. Das Faltverdeck 1 ist von einer einen Fahrgastraum 5 überspannenden Schließstellung A in eine nicht näher dargestellte heckseitige Ablagestellung verlagerbar und umgekehrt.

Vom Verdeckgestell 2 sind lediglich ein großflächiger vorderer, in sich steifer Verdeckabschnitt 6, B-Säulen 7 und ein den Fahrgastraum 5 in Querrichtung bogenförmig überspannender Hauptspriegel 8 dargestellt.

Der vordere Verdeckabschnitt 6, die B-Säulen 7 und zumindest seitlich außenliegende, aufrechte Abschnitte 34 des Hauptspriegels 8 werden durch Druckgußteile aus einer Leichtmetallegierung gebildet.

Der großflächige, in der Schließstellung A benachbart dem Windschutzscheibenrahmen 9 verlaufende formsteife Verdeckabschnitt 6 wird beim Zurückklappen des Faltverdecks 1 dergestalt in den Heckbereich verlagert, daß die äußere Begrenzungsfläche des formsteifen Verdeckabschnitts 6 während der gesamten Verstellbewegung stets nach oben hin gerichtet ist. Der zurückverlagerte Verdeckabschnitt 6 bildet eine Abdeckung zwischen dem Fahrgastraum 5 und dem dahinterliegenden Verdeckkastendeckel 48.

Der Verdeckbezug 3 ist an seinem vorderen querverlaufenden Rand in nicht näher dargestellter Weise über lösbare Befestigungselemente mit dem Verdeckabschnitt 6 verbunden, wogegen der hintere Rand des Verdeckbezugs 3 an einem heckseitigen Spannbügel lösbar befestigt ist. Ferner ist der Verdeckbezug 3 am hinteren Rand des Verdeckabschnitts 6 fixiert, so daß der Verdeckabschnitt 6 in sämtlichen Stellungen von einem gespannten Verdeckbezug 3 abgedeckt ist.

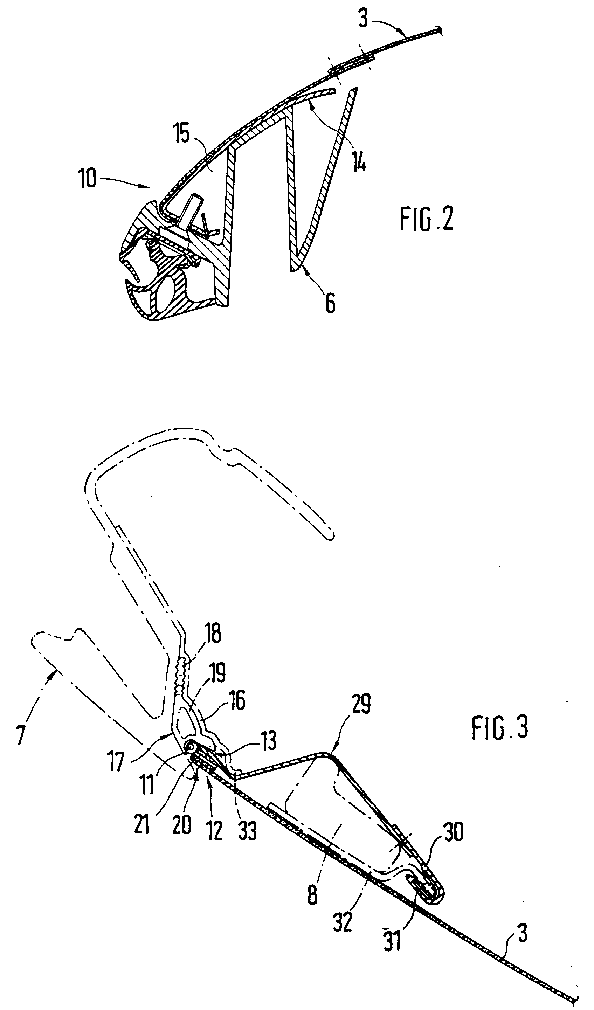

An den beiden Längsseiten 10 des Faltverdecks 1 ist der Verdeckbezug 3 einerseits am formsteifen Verdeckabschnitt 6 und andererseits am Hauptspriegel 8 befestigt, wogegen der Verdeckbezug 3 an der dazwischenliegenden B-Säule 7 des Verdeckgestells 2 befestigungslos anliegt und in Schließstellung A des Faltverdecks 1 durch ein Spannseil 11 und eine Stoffsteuerung 12 in eine an der B-Säule 7 vorgesehene Aufnahme 13 hineingezogen wird. Entlang der Längserstreckung des vorderen Verdeckabschnitts 6 ist der Verdeckbezug 3 mittels einer innenliegenden Halteleiste 14 an einer seitlichen Aufnahme 15 des Verdeckabschnitts 6 befestigt (Fig. 2).

Die an der B-Säule 7 vorgesehene Aufnahme 13 wird durch einen Teilbereich der B-Säule 7 und ein auf die B-Säule 7 aufgesetztes Schließblech 16 gebildet. Die Befestigung des Schließbleches 16 an der B-Säule 7 erfolgt beispielsweise durch Schrauben, Nieten oder dgl.

Innerhalb der Aufnahme 13 erstreckt sich ein Dichtkörper 17. Der Dichtkörper 17 umfaßt einen längsgestreckten, eingeklemmten Fußabschnitt 18 und einen darüberliegenden Hohlprofilabschnitt 19, an dem der seitlich außenliegende Rand 20 des Verdeckbezugs 3 aufliegt.

Am seitlichen Rand 20 des Verdeckbezugs 3 ist zumindest entlang der Längserstreckung der B-Säule 7 ein Kederteil 21 aus Kunststoff mit einem eingelegten randseitigen Spannseil 11 angeordnet, wobei ein vorderes Ende des Spannseiles 11 an einer am angrenzenden vorderen Verdeckabschnitt 6 befestigten Halteleiste 14 bei 22 festgelegt ist.

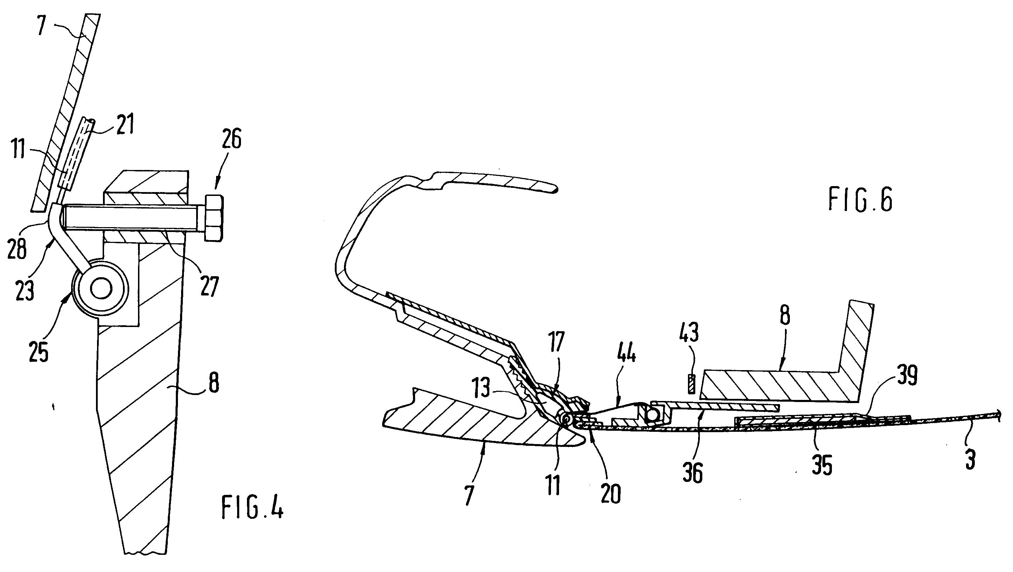

Das andere Ende 23 des Spannseiles 11 ist unterhalb der Gürtellinie 24 am Hauptspriegel 8 angelenkt. Gemäß Fig. 4 ist das Ende 23 des Spannseils 11 an einem schwenkbaren Beschlagteil 25 verankert, wobei das Beschlagteil 25 durch eine Stellschraube 26 in Querrichtung einstellbar ist.

Die Stellschraube 26 ist in eine horizontal ausgerichtete Gewindebohrung 27 des Hauptspriegels 8 eingedreht und wirkt mit ihrem freien Ende mit einem Hülsenabschnitt 28 des schwenkbar gelagerten Beschlagteiles 25 zusammen.

Bedingt durch die Drehpunkte und die Außenkontur von B-Säule 7 und Hauptspriegel 8 findet beim Öffnen und Schließen eine Relativbewegung in Querrichtung statt und es muß eine Stoffsteuerung 12 erfolgen, dergestalt, daß der Verdeckbezug 3 in Teilbereichen schneller in X- Richtung (Längsrichtung) zurückgeholt wird wie die angrenzenden Bauteile (B-Säule 7, Hauptspriegel 8). Die B-Säule 7 wandert beim Zurückschwenken des Faltverdecks 1 nach innen.

Die beim Öffnen und Schließen des Faltverdecks 1 erforderliche Stoffsteuerung 12 wird gemäß einer ersten Ausführungsform durch ein Stretchband 29 gebildet, das mit der Innenseite des Hauptspriegels 8 abstützend zusammenwirkt (Fig. 3).

Das Stretchband 29 ist an seinem einen Ende mit dem seitlichen Rand 20 des Verdeckbezuges 3 bzw. dem Kederteil 21 vernäht. Das andere Ende des Stretchbandes 29 ist mit einem Aufsteckprofil 30 verbunden, das auf einen abgewinkelten Flansch 31 eines Halteblechs 32 aufgesetzt ist. Das sich in Höhenrichtung erstreckende längliche Halteblech 32 ist über Befestigungselemente an der Außenseite des Hauptspriegels 8 in Lage gehalten. Das Halteblech 32 überragt den Hauptspriegel 8 nach vorne und hinten hin bereichsweise (Fig. 3). Benachbart des Kederteils 21 wird das Stretchband 29 durch eine endseitige Abbiegung 33 des Schließblechs 16 nach innen hin umgelenkt. Durch das Stretchband 29 wird der Verdeckbezug 3 beim Schließen des Faltverdecks 1 nach innen in Richtung Aufnahme 13 bewegt.

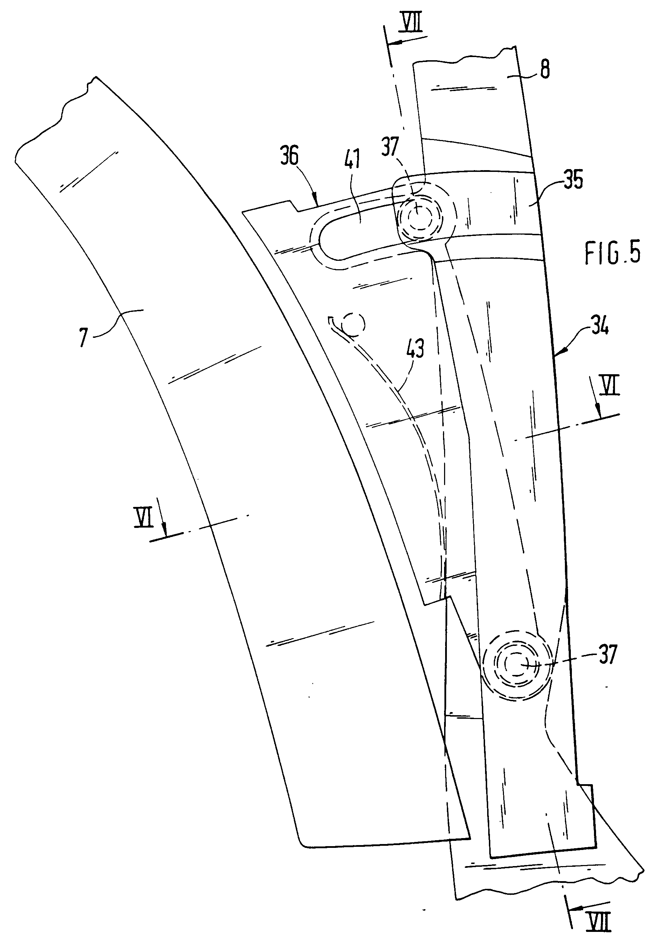

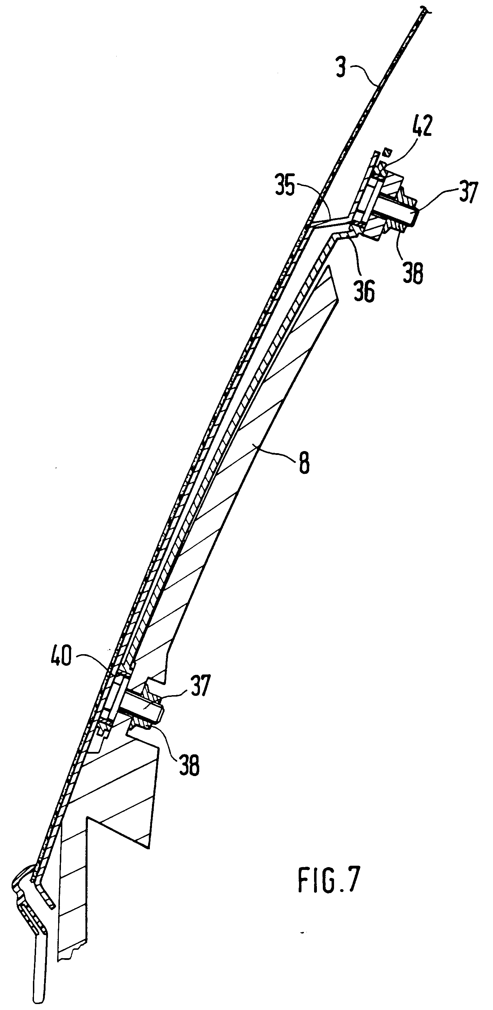

Eine zweite Ausführungsform einer Stoffsteuerung 12 zeigen die Fig. 5 bis 7.

Bei dieser Version ist am aufrechten Abschnitt 34 des Hauptspriegels 8 eine Klemmleiste 35 mit einem federbelasteten Schieber 36 angeordnet. Die Klemmleiste 35 ist - in Höhenrichtung gesehen - über zwei beabstandete Schweißbolzen 37 und Muttern 38 am Hauptspriegel 8 in Lage gehalten.

Zwischen den beiden Befestigungsstellen ist die Klemmleiste 35 umlaufend von einem Zugstreifen 39 umgeben, der über ein Meltexband mit der Innenseite des Verdeckbezugs 3 verbunden ist. Der federbelastete Schieber 36 ist um eine den unteren Schweißbolzen 37 umgebende Distanzhülse 40 drehbar gelagert. An seinem oberen Ende weist der Schieber 36 einen längsgerichteten Führungsschlitz 41 auf, der mit einer den oberen Schweißbolzen 37 umgebenden Hülse 42 in Wirkverbindung steht.

Das mit dem Schieber 36 zusammenwirkende gebogene Federelement 43 ist an seinem einen Ende am Hauptspriegel 8 festgelegt. Das andere Ende des Federelements 43 ist am Schieber 36 gelagert und versucht, diesen in Richtung Hauptspriegel 8 zu bewegen. Das Federelement 43 wird im Ausführungsbeispiel durch eine Blattfeder gebildet.

Der seitliche Randbereich 20 des Verdeckbezuges 3 ist zumindest über einen Teilbereich der Höhenerstreckung der Klemmleiste 35 über einen Zugstreifen 44 mit der Innenseite des Schiebers 36 verbunden. Der Zugstreifen 44 ist an seinem einen Ende am Kederteil 21 befestigt. Das andere Ende des Zugstreifens 44 ist am Schieber 36 festgelegt.

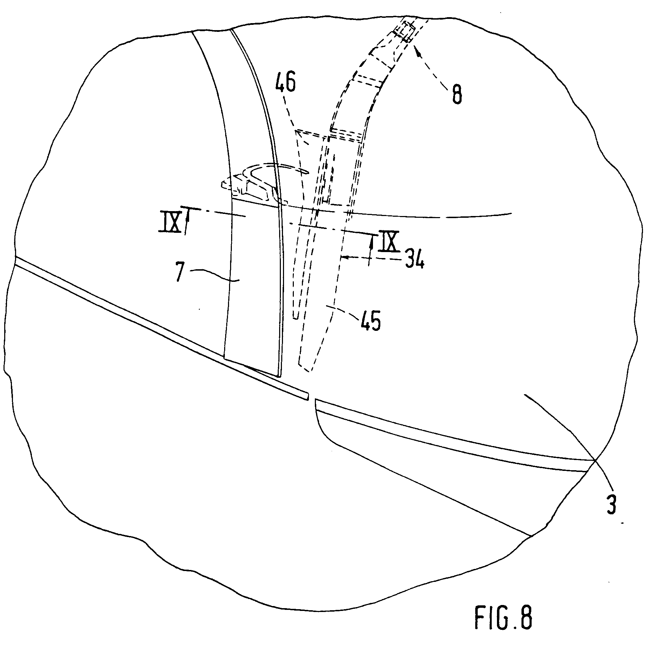

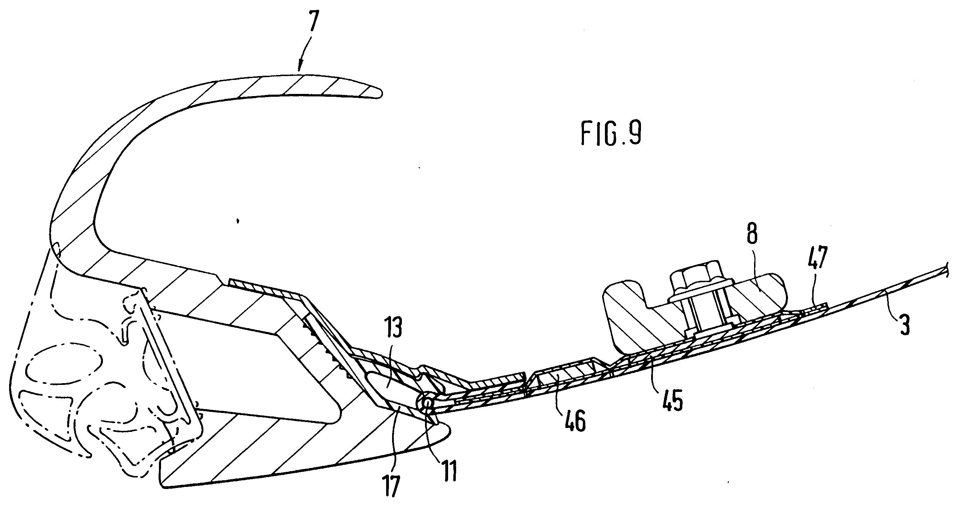

Eine dritte Ausführungsform der Stoffsteuerung 12 ist in den Fig. 8 und 9 dargestellt. Bei dieser Version sind im Bereich des aufrechten Abschnitts 34 des Hauptspriegels 8 eine Klemmleiste 45 und eine vorgelagerte federbelastete Klappe 46 mit dem Verdeckbezug 3 verbunden. Die Klemmleiste 45 und die Klappe 46 sind in einem gemeinsamen doppelseitigen Anzugsstreifen 47 eingenäht, der mit dem Verdeckbezug 3 verbunden ist.

Die Klemmleiste 45 ist örtlich am Hauptspriegel 8 festgeschraubt. Das nicht näher dargestellte Federlelement ist am Hauptspriegel 8 befestigt und wirkt mit seinem anderen Ende mit der Klappe zusammen, so daß diese nach innen hin in Richtung Aufnahme 13 beaufschlagt wird.

## Patentansprüche

1. Faltverdeck (1) für Fahrzeuge, insbesondere Personenkraftwagen, das von einer Schließstellung in eine heckseitige Ablagestellung verlagerbar ist und sich aus einem tragenden Verdeckgestell (2) und einem mit diesem zusammenwirkenden Verdeckbezug (3) zusammensetzt, wobei ein in Schließstellung benachbart des Windschutzscheibenrahmens (9) angeordneter, formsteifer Verdeckabschnitt (6) dergestalt in den Heckbereich verlagerbar wird, daß die dem Fahrgastraum abgekehrte äußere Begrenzungsfläche des formsteifen Verdeckabschnitts (6) während der gesamten Verstellbewegung stets nach oben hin gerichtet ist, **dadurch gekennzeichnet,** daß der Verdeckbezug (3) an den beiden Längsseiten (10) des Faltverdecks (1) einerseits am formsteifen Verdeckabschnitt (6) und andererseits an einem Hauptspriegel (8) befestigt ist, wogegen der Verdeckbezug (3) an einer dazwischenliegenden B-Säule (7) des Verdeckgestells (2) befestigungslos anliegt und durch ein Spannseil (11) und eine Stoffsteuerung (12) - beim Schließen des Faltverdecks (1) - in eine an der B-Säule (7) vorgesehene Aufnahme (13) hineingezogen wird.

2. Faltverdeck nach Anspruch 1, **dadurch gekennzeichnet,** daß die an der B-Säule (7) vorgesehene Aufnahme (13) durch einen Teilbereich der B-Säule (7) und ein auf die B-Säule (7) aufgesetztes profiliertes Schließblech (16) gebildet wird.

3. Faltverdeck nach den Ansprüchen 1 und 2, **dadurch gekennzeichnet,** daß innerhalb der Aufnahme (13) ein Dichtkörper (17) angeordnet ist, an dem der seitlich außenliegende Rand (20) des Verdeckbezugs (3) aufliegt.

4. Faltverdeck nach den Ansprüchen 1 bis 3, **dadurch gekennzeichnet,** daß am seitlichen Rand (19) des Verdeckbezuges (3) zumindest entlang der Längserstreckung der B-Säule (7) ein Kederteil (20) aus Kunststoff mit einem eingelegten, randseitigen Spannseil (11) angeordnet ist, wobei ein Ende des Spannseils (11) an einer am angrenzenden vorderen Verdeckabschnitt (6) befestigten Halteleiste (13) festgelegt ist, wogegen das andere Ende des Spannseiles (11) unterhalb einer Gürtellinie (24) am Hauptspriegel (8) angelenkt ist.

5. Faltverdeck nach Anspruch 1, **dadurch gekennzeichnet,** daß die Stoffsteuerung (12) durch ein innenliegendes, mit der Innenseite des Hauptspriegels (8) zusammenwirkendes Stretchband (29) gebildet wird.

6. Faltverdeck nach Anspruch 5, **dadurch gekennzeichnet,** daß ein Ende des Stretchbandes (29) mit dem Randbereich (20) des Verdeckbezuges (3) verbunden ist und daß das andere Ende des Stretchbandes (29) über ein angeschlossenes Aufsteckprofil (30) auf einen Flansch (31) eines Haltebleches (32) aufgesteckt ist, wobei das Halteblech (32) an der Außenseite des Hauptspriegels (8) befestigt ist.

7. Faltverdeck nach Anspruch 1, **dadurch gekennzeichnet,** daß die Stoffsteuerung (12) durch einen federbelasteten, mit dem Randbereich (20) des Verdeckbezuges (3) verbundenen Schieber (36) gebildet wird, der an einer am Hauptspriegel (8) in Lage gehaltenen Klemmleiste (35) schwenkbar gelagert ist.

8. Faltverdeck nach Anspruch 7, **dadurch gekennzeichnet,** daß der Schieber (36) um einen unteren Drehpunkt schwenkbar gelagert ist, und daß die Schwenkbewegung durch eine am Schieber (36) ausgebildete längsverlaufende Schlitzführung (41) begrenzt ist, die mit der Klemmleiste (35) in Wirkverbindung steht.

9. Faltverdeck nach Anspruch 1, **dadurch gekennzeichnet,** daß die Stoffsteuerung (12) durch eine federbelastete Klappe (46) gebildet wird, die mit einer am Hauptspriegel (8) festgelegten Klemmleiste (45) in Wirkverbindung steht.

10. Faltverdeck nach Anspruch 9, **dadurch gekennzeichnet,** daß die von einem zweilagigen Anzugsstreifen (47) umgebene Klappe (46) mit der Innenseite des Verdeckbezuges (3) fest verbunden ist.

11. Faltverdeck nach den Ansprüchen 9 und 10, **dadurch gekennzeichnet,** daß das Federelement für die Klappe am Hauptspriegel (8) befestigt und mit seinem freien Ende in die Klappe (46) eingehängt ist, wodurch diese nach innen hin in Richtung Fahrgastraum beaufschlagt ist.

## Claims

1. A folding top (1) for vehicles, in particular passenger cars, which is movable from a closed position into a fold-down position at the rear and which comprises a supporting folding-top frame (2) and a folding-top cover (3) cooperating therewith, wherein a dimensionally stable folding-top portion (6) arranged adjacent to the windscreen frame (9) in the closed position can be moved into the tail area in such a way that the outer boundary face of the dimensionally stable folding-top portion (6) remote from the passenger compartment is always directed upwards during the entire displacement movement, **characterized in that** the folding-top cover (3) is fastened at the two longitudinal sides (10) of the folding top (1) to the dimensionally stable folding-top portion (6) on the one hand and to a main bow (8) on the other hand, whereas the folding-top cover (3) rests against an interposed B-column (7) of the folding-top frame (2) without fastening and is drawn by a tensioning cable (11) and a fabric control means (12) - during the closure of the folding top (1) - into a receiving means (13) provided on the B-column (7).

2. A folding top according to Claim 1, **characterized in that** the receiving means (13) provided on the B-column (7) is formed by a partial area of the B-column (7) and a profiled closure metal sheet (16) mounted on the B-column (7).

3. A folding top according to Claims 1 and 2, **characterized in that** a sealing member (17), on which the edge (20) of the folding-top cover (3) situated laterally on the outside rests, is arranged inside the receiving means (13).

4. A folding top according to Claims 1 to 3, **characterized in that** on the lateral edge (19) of the folding-top cover (3) a beading part (20) of plastics material with an inlaid tensioning cable (11) on the edge is arranged at least along the longitudinal extension of the B-column (7), wherein one end of the tensioning cable (11) is secured on a retaining strip (13) secured to the adjacent front folding-top portion (6), whereas the other end of the tensioning cable (11) is articulated to the main bow (8) below a waist line (24).

5. A folding top according to Claim 1, **characterized in that** the fabric control means (12) is formed by a stretch band (29) situated on the inside and cooperating with the inside of the main bow (8).

6. A folding top according to Claim 5, **characterized in that** one end of the stretch band (29) is connected to the edge area (20) of the folding-top cover (3), and the other end of the stretch band (29) is mounted on a flange (31) of a retang metal sheet (32) by way of an attached mounting section (30), wherein the retaining metal sheet (32) is secured to the outside of the main bow (8).

7. A folding top according to Claim 1, **characterized in that** the fabric control means (12) is formed by a spring-loaded slide (36) which is connected to the edge area (20) of the folding-top cover (3) and which is mounted so as to be pivotable on a clamping strip (35) held in position on the main bow (8).

8. A folding top according to Claim 7, **characterized in that** the slide (36) is mounted so as to be pivotable about a lower centre of rotation, and the pivoting movement is limited by a longitudinally extending guide slot (41) which is formed in the slide (36) and which is operatively connected to the clamping strip (35).

9. A folding top according to Claim 1, **characterized in that** the fabric control means (12) is formed by a spring-loaded flap (46) which is operatively connected to a clamping strip (45) secured to the main bow (8).

10. A folding top according to Claim 9, **characterized in that** the flap (46) surrounded by a two-layered tightening strip (47) is securely connected to the inside of the folding-top cover (3).

11. A folding top according to Claims 9 and 10, **characterized in that** the spring member for the flap is secured to the main bow (8) and is suspended by its free end in the flap (46), as a result of which the said flap (46) is acted upon towards the inside in the direction of the passenger compartment.

## Revendications

1. Capote pliante (1) pour véhicules automobiles, en particulier pour voitures de tourisme, qui est déplaçable d'une position de fermeture dans une position de rangement à l'arrière et qui se compose d'un bâti (2) porteur et d'un revêtement (3) coopérant avec celui-ci, une portion de capote (6) indéformable, disposée en position de fermeture au voisinage du cadre (9) du pare-brise, étant déplaçable dans la zone arrière de manière que la surface de délimitation extérieure, tournée à l'opposé de l'habitacle, de la portion de capote (6) indéformable, est toujours dirigée vers le haut pendant tout le mouvement de déplacement, caractérisée en ce que le revêtement (3) est fixé sur les deux côtés longitudinaux (10) de la capote pliante (1), d'une part sur la portion de capote (6) rigide et d'autre part, sur un arceau principal (8), tandis que le revêtement (3) de la capote s'applique sans fixation contre un montant "B" (7) situé entre ceux-ci du bâti (2) et est tiré à l'intérieur d'un logement (13) prévu sur le montant "B" (7), par un câble de tension (11) et un guidage du tissu (12) - lors de la fermeture de la capote pliante (1).

2. Capote pliante selon la revendication 1, caractérisée en ce que le logement (13), prévu sur le montant "B" (7), est formé par une zone partielle du montant "B" (7) et par une tôle de fermeture (16) profilée, placée sur le montant "B" 7.

3. Capote pliante selon les revendications 1 et 2, caractérisée en ce qu'à l'intérieur du logement (13) est disposé un corps d'étanchéité (17), sur lequel repose le bord (20) situé latéralement à l'extérieur du revêtement (3) de la capote.

4. Capote pliante selon les revendications 1 à 3, caractérisée en ce que sur le bord latéral (19) du revêtement (3) est disposé, au moins le long de l'extension longitudinale du montant "B" (7), un élément formant bourrelet (20) en matière plastique, avec un câble de tension (11) côté bordure, placé à l'intérieur, une extrémité du câble de tension (11) étant fixée sur une baguette de maintien (13), fixée sur la portion de capote (6) avant, adjacente, tandis que l'autre extrémité du câble de tension (11) s'articule sur l'arceau principal (8), au-dessous d'une ligne médiane (24).

5. Capote pliante selon la revendication 1, caractérisée en ce que le guidage du tissu (12) est formé par une bande élastique (29) située à l'intérieur, coopérant avec le côté intérieur de l'arceau principal (8).

6. Capote pliante selon la revendication 5, caractérisée en ce qu'une extrémité de la bande élastique (29) est reliée à la zone de bordure (20) du revêtement (3) de la capote et en ce que l'autre extrémité de la bande élastique (29) est emboîtée, par l'intermédiaire d'un profilé d'emboîtement (30) rattaché, sur une bride (31) d'une tôle de maintien (32), la tôle de maintien (32) étant fixée sur le côté extérieur de l'arceau principal (8).

7. Capote pliante selon la revendication 1, caractérisée en ce que le guidage du tissu (12) est formé par un coulisseau (36) soumis à l'action d'un ressort, lié à la zone de bordure (20) du revêtement (3) de la capote, lequel coulisseau est monté pivotant sur une baguette de serrage (35), maintenue en position sur l'arceau principal (8).

8. Capote pliante selon la revendication 7, caractérisée en ce que le coulisseau (36) est monté de manière à pouvoir pivoter autour d'un point de rotation inférieur, et en ce que le mouvement de pivotement est limité par un guidage à fente (41) s'étendant longitudinalement, formé sur le coulisseau (36), lequel guidage est en liaison active avec la baguette de serrage (35).

9. Capote pliante selon la revendication 1, caractérisée en ce que le guidage du tissu (12) est formé par un volet (46) soumis à l'action d'un ressort, qui est en liaison active avec une baguette de serrage (45), fixée sur l'arceau principal (8).

10. Capote pliante selon la revendication 9, caractérisé en ce que le volet (46), entouré par une bande de traction (47) à deux couches, est solidaire du côté intérieur du revêtement (3) de la capote.

11. Capote pliante selon les revendications 9 et 10, caractérisée en ce que l'élément à ressort pour le volet est fixé sur l'arceau principal (8) et est accroché dans le volet (46), avec son extrémité libre, ce qui fait que ce volet est sollicité vers l'intérieur, en direction de l'habitacle.
